# EUROPEAN PATENT SPECIFICATION

(11) **EP 1 502 804 B1**
(45) Date of publication and mention of the grant of the patent: **20.01.2010**
(21) Application number: 04016465.9
(22) Date of filing: 13.07.2004
(51) Int. Cl.: F16H 61/04

(54) **Shift control apparatus for automatic transmission**
Schaltsteuerung für Automatikgetriebe
Dispositif de commande de changement de vitesses pour transmission automatique

(30) Priority: 28.07.2003 JP 2003202313
(43) Date of publication of application: 02.02.2005
(73) Proprietor: AISIN AW CO., LTD., Anjo-shi, Aichi-ken 444-1192 (JP)
(72) Inventor: Watanabe, Kiyoshi, Anjo-shi Aichi-ken 444-1192 (JP); Sato, Yasushi, Anjo-shi Aichi-ken 444-1192 (JP); Aoyagi, Yuji, Utsunomiya-shi Tochigi-ken 321-0954 (JP); Miyamoto, Koichi, Toyota-shi Aichi-ken 471-8571 (JP); Matsubara, Tooru, Toyota-shi Aichi-ken 471-8571 (JP)
(74) Representative: Vossius & Partner

(56) References cited:
- DE-A1- 10 157 943
- DE-A1- 19 754 461
- US-A- 5 109 818
- US-B1- 6 478 713

## Description

The invention relates to a control technology for an automatic transmission. More specifically, the invention relates to a control technology for preventing a shock from being caused during a shift of an automatic transmission from a drive position to a non-drive position, for example, when a garage shift is being executed.

An automatic transmission to be installed in a vehicle may be a multi-speed automatic transmission or a continuously variable automatic transmission. The multi-speed automatic transmission is composed of a gear-type speed change mechanism and a fluid coupling such as a torque converter or the like.

This multi-speed automatic transmission is connected to an engine via a fluid coupling such as a torque converter or the like. The multi-speed automatic transmission is structured by a speed change mechanism (planetary gear-type deceleration mechanism) having a plurality of power transmission paths. For example, the multi-speed automatic transmission is structured to automatically switch from one of the power transmission paths to another on the basis of an accelerator opening and a vehicle speed, that is, to automatically make a shift in gear ratio (running speed stage). In the multi-speed automatic transmission, a gear stage is determined by engaging or releasing friction elements such as clutch elements, brake elements, and one-way clutch elements in a predetermined manner.

In general, a vehicle having the automatic transmission as described above is provided with a shift lever to be operated by a driver. Based on an operation of the shift lever, a shift position (e.g., a reverse position, a neutral position, or a forward position) is set.

In order to take the vehicle mounted with the automatic transmission structured as described above from a garage before traveling on the road or to put the vehicle thereinto after traveling on the road, a shift from a parking (P) position to a reverse (R) position for moving the vehicle backwards or a shift from a neutral (N) position to a forward (D) position for moving the vehicle forwards or to the reverse (R) position, that is, a so-called garage shift is made.

In making this garage shift, the state of the automatic transmission is shifted from a drive position (the forward (D) position or the reverse (R) position) to a non-drive position (the neutral (N) position) in some cases. In order to solve various problems caused in this case, the following related arts have been proposed.

JP-A-10-61461 discloses a control apparatus according to the preamble of claim 1 for an automatic transmission of a vehicle. This control apparatus can prevent the vehicle from moving and enhance the durability of a frictional engagement device irrespective of the rotational speed of a driving power source if a shifting device performs an operation of shifting the automatic transmission from a running range to a non-running range. This control apparatus comprises the driving power source, the automatic transmission, and the shifting device. The driving power source is provided with an output increasing/reducing mechanism that is controlled by operating an accelerator pedal. The automatic transmission is connected to an output side of the driving power source. A hydraulically operated frictional engagement device is disposed in a torque transmission path of the automatic transmission. The shifting device shifts the automatic transmission from a running range to a non-running range. When the automatic transmission is shifted from a running range to a non-running range due to the operation of the shifting device, the frictional engagement device is released so that the torque transmission path is shut off. The control apparatus further comprises output control means. Before a predetermined period elapses after the shifting device has performed the operation of shifting the automatic transmission from a running range to a non-running range, the output control means suppresses an operation of increasing an output from the output increasing/reducing mechanism even in the case where an operation of increasing an output from the driving power source has been performed by means of an accelerator pedal.

According to this control apparatus for the automatic transmission, before the predetermined period elapses after the shifting device has performed the operation of shifting the automatic transmission from a running range to a non-running range, the output increasing/reducing mechanism is restrained from performing the operation of increasing an output and the increase in the torque to be transmitted to the frictional engagement device is limited, even if the operation of increasing an output from the driving power source has been performed by means of the accelerator pedal.

JP-A-5-141284 discloses a control apparatus for a vehicular automatic transmission. This control apparatus suppresses the dragging of a hydraulically operated frictional engagement device resulting from the operation of a shift lever from a running range to a non-running range, and can raise the revolution of an engine even if the shift lever has been shifted into a non-running range. In the vehicular automatic transmission, if the shift lever is shifted from a running range to a non-running range, the hydraulically operated frictional engagement device that has been engaged is released, and a power transmission path of the transmission is shut off. The control apparatus comprises engine rotational speed detecting means, fuel cut means, shift operation detecting means, timing means, and fuel cut prohibiting means. The engine rotational speed detecting means detects a rotational speed of the engine. The fuel cut means suppresses a rise in engine rotational speed by stopping the supply of fuel in a non-running range if the rotational speed of the engine exceeds a predetermined set value with the shift lever having been shifted into the non-running range. The shift operation detecting means detects an operation of the shift lever from a running range to a non-running range. The timing means measures a time that has elapsed since detection of an operation of the shift lever from a running range to a non-running range by the shift operation detecting means. The fuel cut prohibiting means prohibits the fuel cut means from stopping the supply of fuel if the elapsed time measured by the timing means exceeds a predetermined value.

According to this control apparatus for the vehicular automatic transmission, the timing means measures an elapsed time since an operation of the shift lever from a running range to a non-running range is detected by the shift operation detecting means. If the elapsed time exceeds the predetermined value, the fuel cut prohibiting means prohibits the supply of fuel from being stopped in the non-running range. Accordingly, the fuel cut means for stopping the supply of fuel in the non-running range if the revolution of the engine exceeds the predetermined set value restrains the hydraulically operated frictional engagement device from being dragged as a result of a shift of the shift lever from the running range to the non-running range. In addition, if the elapsed time exceeds the predetermined value, the supply of fuel is prohibited from being stopped, so that the rotational speed of the engine can be raised above the predetermined set value in the non-running range such as the P range or the N range. Therefore, it is possible to check the operation of the engine and to charge a battery. Further, since a racing operation of raising the rotational speed of the engine can be performed in the non-running range, a driver is prevented from fallaciously believing that the engine has broken down.

However, the control apparatuses disclosed in the aforementioned two publications cannot solve the following problem.

Before a predetermined period elapses after a shift of the automatic transmission from a drive position to a non-drive position, the increase in engine output is suppressed even if an operation of increasing an output from the driving power source has been performed by means of the accelerator pedal. Therefore, even if the driver depresses the accelerator pedal with the intention of increasing the revolution of the engine, the engine does not operate as intended by the driver. Thus, the driver feels a sense of incongruity.

The invention has been made to solve the aforementioned problem. It is an object of the invention to provide a shift control apparatus for an automatic transmission which prevents a vehicle from running, which causes no damage to an input clutch, and which ensures a driver of the best operation feeling even if the automatic transmission has been shifted from its driven state to its non-driven state.

According to a first aspect of the invention, until the first period elapses, the throttle is opened to an opening corresponding to a detected opening of the accelerator, which is considered to reflect the intention of the driver. If the first period then elapses, the opening of the throttle is regulated with respect to the detected opening of the accelerator until the second period elapses, that is, until the possibility of generation of a centrifugal hydraulic pressure is eliminated. Thus, until the first period elapses, the throttle is opened in association with the opening of the accelerator with high priority assigned to a request made by the driver. Thereafter, however, the opening of the throttle is regulated until the second period elapses. As a result, it is possible to provide a shift control apparatus for an automatic transmission which prevents a vehicle from running, which causes no damage to an input clutch, and which ensures a driver of the best operation feeling even if the automatic transmission has been shifted from its driven state to its non-driven state.

According to another structure of the invention, until the first period elapses, the throttle is opened in association with a detected opening of the accelerator, which is considered to reflect the intention of the driver. Therefore, it is possible to provide a shift control apparatus for an automatic transmission which prevents a vehicle from running, which causes no damage to an input clutch, and which ensures a driver of the best operation feeling even if the automatic transmission has been shifted from its driven state to its non-driven state.

According to still another structure of the invention, if the state of the automatic transmission is shifted from a drive position to a non-drive position, an engagement element (e.g., an input clutch) is changed from its engaged state to its released state. In this process, until no centrifugal hydraulic pressure is generated as to the engagement element, the opening of the throttle is so controlled as to be regulated with respect to the opening of the accelerator. Thus, the revolution of the engine is restrained from rising even if a hydraulic fluid tending to generate a centrifugal hydraulic pressure remains in a piston chamber of the input clutch. Therefore, no centrifugal hydraulic pressure is generated, and the input clutch is not engaged. Accordingly, it is possible to prevent the vehicle from running (i.e., moving forwards or backwards) against the intention of the driver, and to prevent the input clutch from being burnt out.

According to still another structure of the invention, if the state of the automatic transmission is shifted from a drive position to a non-drive position, the throttle is controlled to be kept from being opened within a period in which a centrifugal hydraulic pressure may be generated. Thus, the revolution of the engine is restrained from rising even if the hydraulic fluid tending to generate a centrifugal hydraulic pressure remains in the piston chamber of the input clutch. Therefore, no centrifugal hydraulic pressure is generated, and the input clutch is not engaged.

According to still another structure of the invention, if the state of the automatic transmission is shifted from a drive position to a non-drive position, the supply of fuel to the engine is stopped within a period in which a centrifugal hydraulic pressure may be generated. Thus, the revolution of the engine is restrained from rising even if the hydraulic fluid tending to generate a centrifugal hydraulic pressure remains in the piston chamber of the input clutch. Therefore, no centrifugal hydraulic pressure is generated, and the input clutch is not engaged.

Hereinafter, an embodiment of the invention will be described with reference to the drawings
FIG. 1 is a control block diagram of an automatic transmission in accordance with an embodiment of the invention;
FIG. 2 is an operation chart of the automatic transmission shown in FIG. 1;
FIG. 3 is a first diagram showing a hydraulic circuit;
FIG. 4 is a second diagram showing the hydraulic circuit;
FIG. 5 is a flowchart showing the control structure of a program that is executed by an ECU in accordance with the embodiment of the invention; and
FIG. 6 is a timing chart showing the operation of a vehicle that is mounted with an automatic transmission in accordance with the embodiment of the invention.

In the following description, like components are denoted by like reference symbols. Those components which are denoted by the same reference symbol are identical in name and function as well. Accordingly, the detailed description thereof will not be repeated.

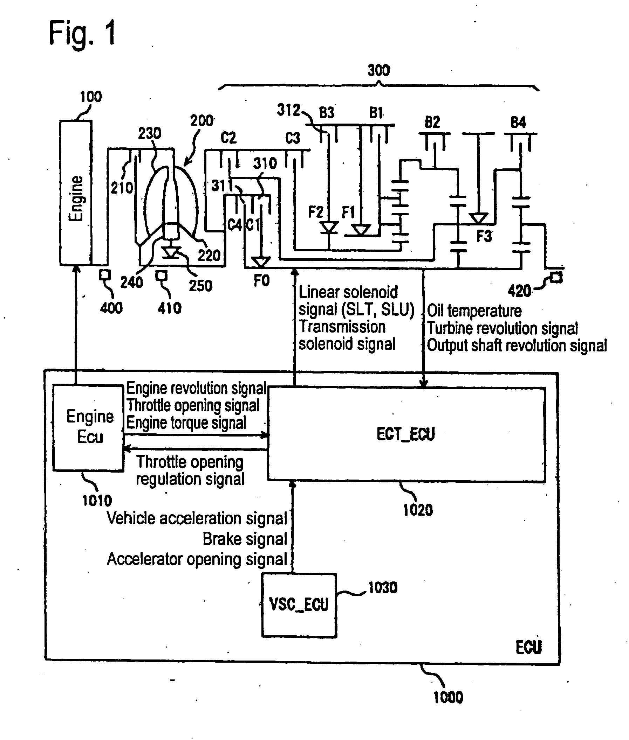

Hereinafter, a power train of a vehicle including a control apparatus in accordance with the present embodiment will be described with reference to the drawings. The control apparatus in accordance with the present embodiment is realized by an Electronic Control Unit (ECU) 1000 shown in FIG. 1. An automatic transmission to be described in the present embodiment has a planetary gear-type deceleration mechanism that is provided with a torque converter as a fluid coupling.

Referring to FIG. 1, the power train of the vehicle including the control apparatus in accordance with the present embodiment will be described. More specifically, the control apparatus in accordance with the present embodiment is realized by an Electronic Controlled Automatic Transmission (ECT)_ECU 1020 in the ECU 1000 shown in FIG. 1.

As shown in FIG 1, the power train of the vehicle is composed of an engine 100, a torque converter 200, an automatic transmission 300, and the ECU 1000.

An output shaft of the engine 100 is connected to an input shaft of the torque converter 200. The engine 100 is coupled to the torque converter 200 by a rotational shaft. Accordingly, an output shaft revolution NE of the engine 100 (i.e., engine revolution NE), which is detected by an engine revolution sensor 400, is equal to an input shaft revolution of the torque converter 200 (i.e., pump revolution).

The torque converter 200 is composed of a lock-up clutch 210 for directly coupling the input shaft to the output shaft, a pump impeller 220 on the side of the input shaft, a turbine impeller 230 on the side of the output shaft, a stator 240 having a one-way clutch 250 and performing a function of torque amplification. The torque converter 200 is connected to the automatic transmission 300 by a rotational shaft. A turbine revolution sensor 410 detects an output shaft revolution NT (turbine revolution NT) of the torque converter 200. An output shaft revolution sensor 420 detects an output shaft revolution NOUT of the automatic transmission 300.

A lock-up relay valve for supplying a hydraulic pressure selectively supplies/discharges a hydraulic pressure to/from an engagement side or a release side, whereby the lock-up clutch 210 is operated. A lock-up piston is axially displaced and thereby comes into contact with or moves away from a front cover via a frictional member. An inner space of the torque converter 200 is divided by the lock-up clutch 210. A release-side oil chamber for releasing the lock-up clutch 210 is formed between the lock-up piston and the front cover. An engagement-side oil chamber for engaging the lock-up clutch 210 is formed between the lock-up piston and a turbine runner. A hydraulic pressure is supplied from a hydraulic circuit in a valve body to the release-side oil chamber and the engagement-side oil chamber.

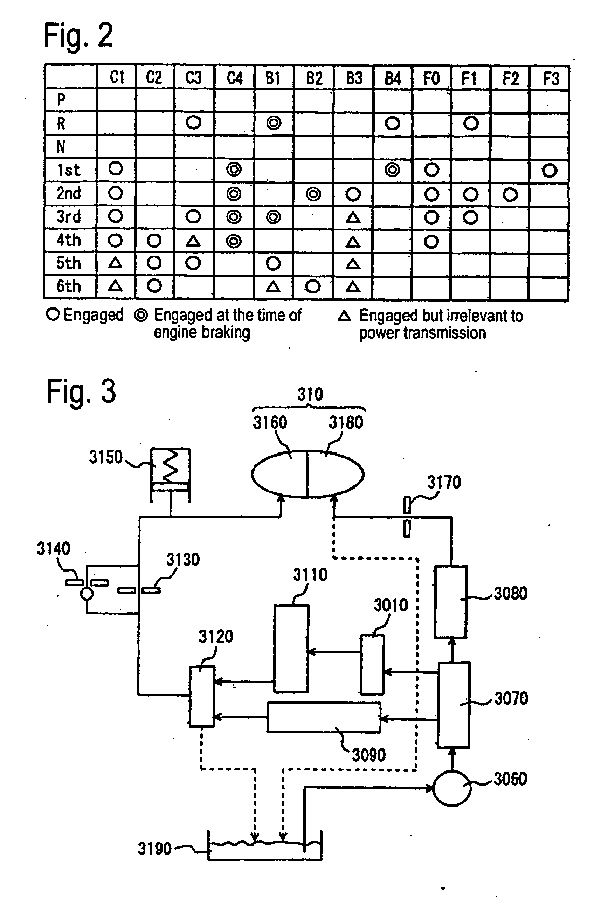

FIG 2 shows an operation chart of the automatic transmission 300. The operation chart in FIG 2 illustrates whether each of frictional elements, namely, clutch elements (C1 to C4), brake elements (B1 to B4), and one-way clutch elements (F0 to F3) is to be engaged or released for each gear stage. In a first speed for starting the vehicle, the clutch element (C1) and the one-way clutch elements (F0 and F3) are engaged. Out of these clutch elements, the clutch element C1 is particularly referred to as an input clutch 310. The input clutch 310 is also referred to as a forward clutch. As is apparent from the operation chart in FIG 2, the input clutch 310 is always used in its engaged state when establishing a shift speed for moving the vehicle forwards, namely, a shift speed that does not correspond to a parking (P) position, a reverse (R) position, or a neutral (N) position. Therefore, if a shift is made from a forward (D) position to the neutral (N) position, the input clutch (C1) 310 is always changed from its engaged state to its released state. Further, if a shift is made from the reverse (R) position to the neutral (N) position, the clutch C3 is changed from its engaged state to its released state.

If the automatic transmission is thus changed from its driven state to its non-driven state, at least one of the clutches is changed from its engaged state to its released state. Although the following description deals with the input clutch (C1) 310, the same holds true for the clutch C3. A hydraulic circuit relating to the input clutch (C1) 310 will be described in detail later.

The ECU 1000 for controlling the power train includes an engine ECU 1010 for controlling the engine 100, the Electronic Controlled Automatic Transmission (ECT)_ECU 1020 for controlling the automatic transmission 300, and a Vehicle Stability Control (VSC)_ECU 1030.

A signal indicating a turbine revolution NT and a signal indicating an output shaft revolution NOUT are input to the ECT_ECU 1020 from the turbine revolution sensor 410 and the output shaft revolution sensor 420 respectively. A signal indicating an engine revolution NE detected by the engine revolution sensor 400 and a signal indicating a throttle opening detected by a throttle position sensor are input to the ECT_ECU 1020 from the engine ECU 1010.

These revolution sensors face teeth of a revolution detecting gear that is fitted to the input shaft of the torque converter 200, the output shaft of the torque converter 200, and the output shaft of the automatic transmission 300. The revolution sensors are also capable of detecting slight revolutions of the input shaft of the torque converter 200, the output shaft of the torque converter 200, and the output shaft of the automatic transmission 300 respectively. Each of the revolution sensors is designed as a sensor using a magneto resistive, which is generally referred to as a semiconductor sensor.

Furthermore, a signal indicating a vehicle acceleration detected by a G sensor and a signal indicating that a brake of the vehicle is ON are input to the ECT_ECU 1020 from the VSC_ECU 1030. The VSC_ECU 1030 receives a brake control signal from the ECT_ECU 1020 and controls the brake of the vehicle in response to it.

An accelerator opening signal is transmitted from the VSC_ECU 1030 to the ECT_ECU 1020. A throttle opening regulation signal is transmitted from the ECT_ECU 1020 to the engine ECU 1010.

In the ECU 1000 as the control apparatus in accordance with the embodiment of the present invention, if the automatic transmission 300 is changed from its driven position to its non-driven position (i.e., if a shift is made from the forward (D) position or the reverse (R) position to the non-driven position (the neutral (N) position)), the ECT_ECU 1020 transmits a throttle opening regulation signal to the engine ECU 1010 so as to prevent generation of a centrifugal hydraulic pressure, on the basis of an accelerator opening signal input from the VSC_ECU 1030.

During normal control, the engine ECU 1010 performs control in such a manner as to obtain a throttle opening corresponding to an accelerator opening. Upon receiving the throttle opening regulation signal, however, the engine ECU 1010 regulates the throttle such that the opening thereof does not reach the throttle opening corresponding to the accelerator opening. The accelerator opening signal may also be input directly to the engine ECU 1010 or the ECT_ECU 1020 (instead of being transmitted via the VSC_ECU 1030). In addition, it is not absolutely required that the ECU 1000 be composed of the engine ECU 1010, the ECT_ECU 1020, and the VSC_ECU 1030.

Referring to FIG 3, the hydraulic circuit for the input clutch (C1) 310 will be described in detail. As shown in FIG 3, the hydraulic circuit supplies a hydraulic fluid remaining in an oil pan 3190 to a primary regulator valve 3070 by means of an oil pump 3060. A line pressure is supplied from the primary regulator valve 3070 to a secondary regulator valve 3080, a manual valve 3090, and a solenoid modulator valve 3010. The hydraulic fluid whose pressure has been adjusted to a predetermined hydraulic pressure by the secondary regulator valve 3080 is supplied to a C1 canceller chamber 3180 of the input clutch (C1) 310 via a lubricating orifice 3170.

On the other hand, the hydraulic fluid that has been supplied from the primary regulator valve 3070 to the manual valve 3090 is supplied to a clutch control valve 3120. The hydraulic fluid that has been supplied from the primary regulator valve 3070 to the solenoid modulator valve 3010 is supplied to the clutch control valve 3120 via a linear solenoid 3110. The hydraulic fluid that has been supplied to the clutch control valve 3120 is supplied to a C1 piston chamber 3160 of the input clutch (C1) 310 via a C1 application orifice 3130. A C1 accumulator 3150 is disposed between the C1 application orifice 3130 and the C1 piston chamber 3160. When the hydraulic fluid is discharged from the C1 piston chamber 3160, it flows through the clutch control valve 3120 via a C1 drain orifice 3140 and is returned to the oil pan 3190. The hydraulic fluid drained from the C1 canceller chamber 3180 is also returned to the oil pan 3190.

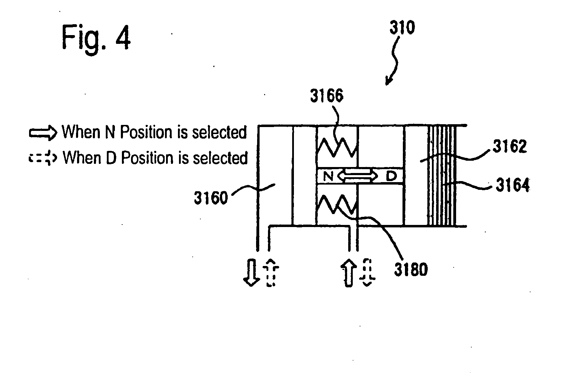

Referring to FIG. 4, the input clutch (C1) 310 shown in FIG 3 will be described in fuller detail.

FIG 4 shows the flow of the hydraulic fluid at the time when the neutral (N) position is selected and the flow of the hydraulic fluid at the time when the forward (D) position is selected. As shown in FIG 4, the input clutch (C1) 310 is composed of the C1 piston chamber 3160, the C1 canceller chamber 3180, and a piston return spring 3166. The hydraulic fluid exerting a force in such a direction as to press a C1 piston 3162 to a C1 clutch (frictional member) 3164 is accumulated in the C1 piston chamber 3160. The hydraulic fluid for causing the C1 piston 3162 to move away from the C1 clutch 3164 is supplied to the C1 canceller chamber 3180. A force is applied to the piston return spring 3166 in such a direction as to move the C1 piston 3162 away from the C1 clutch 3164.

When the forward (D) position is selected during stoppage of the vehicle, the hydraulic fluid is supplied to the C1 piston chamber 3160 and discharged from the C1 canceller chamber 3180. The C1 piston 3162 thereby presses the C1 clutch 3164, so that the input clutch (C1) 310 is engaged. On the other hand, if a shift is made from the forward (D) position to the neutral (N) position, the hydraulic fluid that has been supplied to the C1 piston chamber 3160 is drained and is supplied to the C1 canceller chamber 3180, so that the C1 piston 3162 moves away from the C1 clutch 3164.

In the input clutch (C1) 310 structured as described above, if a shift is made from the forward (D) position as a driven state to the neutral (N) position as a non-driven state during stoppage of the vehicle, the hydraulic fluid is drained from the C1 piston chamber 3160 instead of being supplied thereto, whereas the hydraulic fluid is supplied to the C1 canceller chamber 3180 instead of being drained therefrom. The hydraulic fluid discharged from the C1 piston chamber 3160 is discharged to the oil pan 3190 through the C1 drain orifice 3140.

At this moment, if the engine 100 starts rotating with the hydraulic fluid remaining in the piston chamber 3160, a centrifugal hydraulic pressure is applied to the hydraulic fluid remaining in the piston chamber 3160 due to the rotation of the engine 100. Until the C1 canceller chamber 3180 is filled with the hydraulic fluid, the hydraulic fluid remaining in the C1 piston chamber 3160 generates a force that is applied in such a direction that the C 1 piston 3162 presses the C1 clutch 3164. As a result, the input clutch (C1) 310 is almost engaged. In such a state, the vehicle may start moving forwards, or the C1 clutch 3164 may be burnt out.

FIGS. 3 and 4 illustrate the case where a shift is made from the forward (D) position to the neutral (N) position using the input clutch (C1) that is engaged when the forward (D) position is selected. If a shift is made from the reverse (R) position to the neutral (N) position, the same structure as in the case of the input clutch (C1) is adopted for the clutch C3 that is engaged when the reverse (R) position is selected.

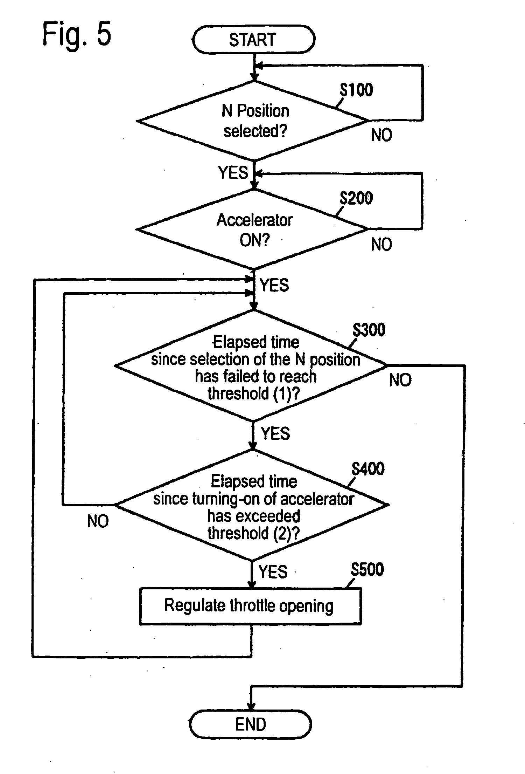

Referring to FIG 5, the control structure of a program that is executed by the ECU 1000 in accordance with the present embodiment will be described. Note that a flowchart in the program in FIG 5 is executed by the ECT_ECU 1020 in the ECU 1000. It is to be noted, however, that the ECU for executing this program is not limited to the ECT_ECU 1020.

In a step (hereinafter referred to as "S") 100, the ECT_ECU 1020 determines whether the neutral position is turned on or off, namely, whether or not a shift has been made from the forward (D) position or the reverse (R) position to the neutral (N) position. A neutral start switch (NSW) makes this determination, and the ECT_ECU 1020 detects a result of the determination. If the neutral position is turned on (YES in S100), the process proceeds to S200. If not (NO in S100), the process returns to S100 and waits until the neutral position is detected.

In S200, the ECT_ECU 1020 determines whether or not the accelerator has been depressed (hereinafter referred to that "the accelerator has been turned on"). If the accelerator has been turned on (YES in S200), the process proceeds to S300. If not (NO in S200), the process returns to S200 and waits until the accelerator is depressed.

In S300, the ECT_ECU 1020 determines whether or not an elapsed time since the neutral position is turned from off to on has failed to reach a threshold (1). If the elapsed time since turning-on of the neutral position has failed to reach the threshold (1) (YES in S300), the process proceeds to S400. If not (NO in S300), the process is terminated.

In S400, the ECT_ECU 1020 determines whether or not an elapsed time since the turning-on of the accelerator has exceeded a threshold (2). The threshold (2) is set such that a centrifugal force resulting from the rotation of the engine 100 substantially prevents the C1 clutch 3164 from being engaged, namely, from entering a power transmission state. If the elapsed time since the turning-on of the accelerator has exceeded the threshold (2) (YES in S400), the process proceeds to S500. If not (NO in S400), the process returns to S300.

In S500, the ECT_ECU 1020 performs throttle opening regulation control. More specifically, the ECT_ECU 1020 transmits a throttle opening regulation signal to the engine ECU 1010, which then performs throttle opening regulation control. In this case, unlike normal control, throttle opening regulation control is performed to prevent the throttle from being opened to a normal opening corresponding to an opening of the accelerator.

It will now be described how a vehicle that is mounted with the ECT_ECU 1020 as the control apparatus in accordance with the present embodiment operates on the basis of the aforementioned structure and flowchart. The following description of the operation handles a case where a driver depresses the accelerator immediately after having shifted a shift lever of an automatic transmission installed in the vehicle from the forward (D) position or the reverse (R) position to the neutral (N) position.

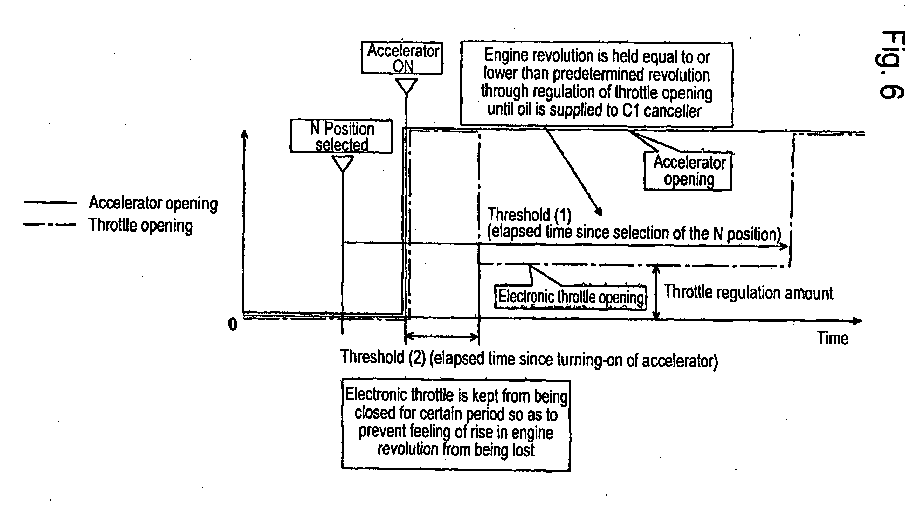

In FIG. 6, while the axis of abscissa represents time, a solid line and an alternate long and short dash line represent accelerator opening and throttle opening respectively. The threshold (1) is set for the elapsed time since the neutral position is turned from off to on, whereas the threshold (2) is set for the elapsed time since the turning-on of the accelerator.

If the neutral position is turned from off to on (YES in S100) and if the accelerator has been depressed (YES in S200), it is determined whether or not the elapsed time since the neutral position is turned from off to on has failed to reach the threshold (1).

If the elapsed time since the neutral position is turned from off to on has failed to reach the threshold (1) (YES in S300) and if the elapsed time since the turning-on of the accelerator has failed to reach the threshold (2) (NO in S400), the regulation of throttle opening is not carried out. That is, as shown in FIG. 6, if the driver depresses the accelerator after turning-on of the neutral position, the performance of control continues with a throttle opening corresponding to an accelerator opening until the elapsed time since the turning-on of the accelerator exceeds the threshold (2).

That is, for a certain period from a timing when the driver depresses the accelerator to a timing corresponding to the threshold (2), the throttle is controlled in such a direction as to prevent forcible closure thereof. The feeling of a rise in engine revolution can thereby be prevented from being lost.

On the other hand, if the elapsed time since the neutral position is turned from off to on has failed to reach the threshold (1) (YES in S300) and if the elapsed time since the turning-on of the accelerator has exceeded the threshold (2) (YES in S400), throttle opening regulation control is performed (S500). At this moment, as shown in FIG. 6, because the elapsed time since the turning-on of the accelerator has reached or exceeded the threshold (2), the opening of the throttle is so controlled as to become smaller than the opening of the accelerator. This control amount is defined as a throttle regulation amount.

That is, even if the driver depresses the accelerator greatly, the throttle does not open greatly, and the revolution of the engine 100 is restrained from rising. In this manner, the C1 canceller chamber 3180 is filled with the hydraulic fluid, and the revolution of the engine 100 is held equal to or lower than a predetermined revolution due to the regulation of the throttle opening until the hydraulic fluid is discharged from the C1 piston chamber 3160. Thus, the generation of a centrifugal hydraulic pressure can be suppressed, and the burnout or the like of the C1 clutch 3164 can be prevented.

As described hitherto, according to the ECT_ECU as the control apparatus in accordance with the present embodiment, if the driver depresses the accelerator pedal after the issuance of a shifting command from a driven state of the vehicle (i.e., the forward (D) position or the reverse (R) position) to a non-driven state of the vehicle (i.e., the neutral (N) position), the performance of control continues with a throttle opening corresponding to an accelerator opening for a period indicated by the threshold (2). If the elapsed time since the turning-on of the accelerator exceeds the threshold (2), throttle opening regulation control is performed until the elapsed time since the neutral position is turned from off to on exceeds the threshold (1). In this case, the opening of the throttle with respect to the opening of the accelerator is so controlled as to become smaller than usual. Thus, the driver shifts the shift lever to the neutral (N) position and then depresses the accelerator pedal to turn the accelerator on. Since then, the revolution of the engine keeps rising only for a period corresponding to the threshold (2). Afterwards, throttle opening regulation control is started so that the opening of the throttle becomes smaller with respect to the opening of the accelerator. Thus, the revolution of the engine is prevented from rising. By performing control in this manner, the operation feeling, that is, the feeling of a rise in engine revolution in response to depression of the accelerator pedal by the drive can be ensured. Also, by regulating the opening of the throttle before the C1 clutch is engaged due to a centrifugal force resulting from a rise in engine revolution, the generation of a centrifugal hydraulic pressure by the hydraulic fluid remaining in the C1 piston chamber can be obviated, and the burnout of the C1 clutch can be prevented.

A fuel-cut operation of stopping the supply of fuel to the engine 100 may be performed instead of the aforementioned throttle opening regulation control.

Even before the threshold (2) is exceeded, the regulation of throttle opening may be carried out immediately if the revolution of the engine has reached a predetermined revolution due to the turning-on of the accelerator.

In all respects, the embodiment disclosed herein should be regarded not as limitative but as exemplary. The scope of the invention is defined not by the foregoing description but by the following claims. The invention is intended to cover all the modifications that are within the scope of the claims.

## Claims

1. A shift control apparatus for an automatic transmission (300) that shifts an output from an engine (100) for power transmission, comprising:
detection means (410,420) for detecting a shift of a state of the automatic transmission from a drive position to a non-drive position; and
control means (1000) for performing control so as to regulate an opening of a throttle with respect to an opening of an accelerator within a first predetermined period after the detection, that is set in advance,
**characterized in that**
the control means (1000) includes means for performing control so as to regulate a throttle opening with respect to a detected accelerator opening until a second period elapses after the turning-on of the accelerator, that is set in advance, within the first predetermined period after the detection.

2. The shift control apparatus according to claim 1, wherein
the control means (1000) includes means for performing control so as to open the throttle in association with a detected opening of the accelerator until the first period elapses.

3. The shift control apparatus according to claim 1 or 2, wherein
the automatic transmission (300) has an engagement element that is engaged when a vehicle starts moving, and
the first predetermined period set in advance is set on the basis of a period that elapses until generation of a centrifugal hydraulic pressure in the engagement element is stopped.

4. The shift control apparatus according to claim 1, 2 or 3, wherein
the control means (1000) includes means for performing control so as to keep the throttle from being opened until a second period elapses after the lapse of the first period after the turning-on of the accelerator, that is set in advance, within the first predetermined period after the detection, that is set in advance.

5. The shift control apparatus according to claim 1, 2, 3 or 4, wherein
the control means (1000) includes means for performing control so as to stop the supply of fuel until a second period elapses after the lapse of the first period after the turning-on of the accelerator, that is set in advance, within the first predetermined period after the detection, that is set in advance.

## Patentansprüche

1. Schaltsteuerung für ein Automatikgetriebe (300), das eine Ausgangsleistung von einem Antrieb (100) zur Leistungsübertragung schaltet, mit:
einer Detektionseinrichtung (410, 420) zum Detektieren einer Schaltung eines Zustands des Automatikgetriebes von einer Fahrposition zu einer Nichtfahrposition, und
einer Steuereinrichtung (1000) zum Ausführen einer Steuerung zum Regulieren einer Öffnung eines Drosselventils unter Berücksichtigung des Öffnungsgrades durch ein Gaspedal innerhalb eines ersten im Voraus gesetzten, vorgegebenen Zeitintervalls nach der Detektion,
**dadurch gekennzeichnet, dass** die Steuereinrichtung (1000) eine Einrichtung zum Ausführen der Steuerung aufweist, um eine Drosselventilöffnung unter Berücksichtigung eines detektierten Gaspedalöffnungsgrades zu regulieren, bis ein zweites im Voraus gesetztes Zeitintervall nach dem Betätigen des Gaspedals abläuft, innerhalb des ersten vorgegebenen Zeitintervalls nach der Detektion.

2. Schaltsteuerung nach Anspruch 1, wobei die Steuereinrichtung (1000) eine Einrichtung zum Ausführen einer Steuerung aufweist, um das Drosselventil in Bezug zu einem detektierten Gaspedalöffnungsgrad zu öffnen, bis das erste Zeitintervall abläuft.

3. Schaltsteuerung nach Anspruch 1 oder 2, wobei
das Automatikgetriebe (300) ein Eingriffselement aufweist, das in Eingriff ist, wenn ein Fahrzeug sich zu bewegen beginnt, und
das erste im Voraus gesetzte, vorgegebene Zeitintervall auf der Basis eines Zeitintervalls gesetzt ist, das abläuft, bis die Erzeugung eines zentrifugalen hydraulischen Druckes in dem Eingriffselement gestoppt ist.

4. Schaltsteuerung nach Anspruch 1, 2 oder 3, wobei die Steuereinrichtung (1000) eine Einrichtung zum Ausführen einer Steuerung innerhalb des ersten im Voraus gesetzten, vorgegebenen Zeitintervalls nach der Detektion aufweist, um das Drosselventil geschlossen zu halten, bis ein zweites im Voraus gesetztes Zeitintervall nach dem Ablauf des ersten Zeitintervalls nach dem Betätigen des Gaspedals abläuft.

5. Schaltsteuerung nach Anspruch 1, 2, 3 oder 4, wobei die Steuereinrichtung (1000) eine Einrichtung zum Ausführen einer Steuerung innerhalb des ersten im Voraus gesetzten, vorgegebenen Zeitintervalls nach der Detektion aufweist, um die Versorgung mit Kraftstoff zu unterbrechen, bis ein zweites im Voraus gesetztes Zeitintervall nach dem Ablauf des ersten Zeitintervalls nach dem Betätigen des Gaspedals abläuft.

## Revendications

1. Dispositif de commande de changement de vitesses pour une transmission automatique (300) qui change une sortie d'un moteur (100) pour la transmission de puissance, comprenant :
des moyens de détection (410, 420) pour détecter un changement d'un état de la transmission automatique d'une position de conduite à une position de non conduite ; et
des moyens de commande (1000) pour réaliser la commande de façon à réguler une ouverture des gaz par rapport à une ouverture d'un accélérateur pendant une première période prédéterminée après la détection, qui est réglée à l'avance,
**caractérisé en ce que**
les moyens de commande (1000) incluent des moyens pour réaliser la commande de façon à réguler une ouverture des gaz par rapport à une ouverture d'accélérateur détectée jusqu'à ce qu'une seconde période se soit écoulée après l'actionnement de l'accélérateur, qui est réglée à l'avance, pendant la première période prédéterminée après la détection.

2. Dispositif de commande de changement de vitesses selon la revendication 1, dans lequel
les moyens de commande (1000) incluent des moyens pour réaliser une commande de façon à ouvrir les gaz en association avec une ouverture détectée de l'accélérateur jusqu'à ce que la première période se soit écoulée.

3. Dispositif de commande de changement de vitesses selon la revendication 1 ou 2, dans lequel
la transmission automatique (300) a un élément de prise qui est en prise quand un véhicule commence à se déplacer, et
la première période prédéterminée réglée à l'avance est réglée en fonction d'une période qui s'écoule jusqu'à l'arrêt de la génération d'une pression hydraulique centrifuge dans l'élément de prise.

4. Dispositif de commande de changement de vitesses selon la revendication 1, 2 ou 3, dans lequel
les moyens de commande (1000) incluent des moyens pour réaliser la commande de façon à empêcher les gaz d'être ouverts jusqu'à ce qu'une seconde période se soit écoulée après l'écoulement de la première période après l'actionnement de l'accélérateur, qui est réglée à l'avance, pendant la première période prédéterminée après la détection, qui est réglée à l'avance.

5. Dispositif de commande de changement de vitesses selon la revendication 1, 2, 3 ou 4, dans lequel
les moyens de commande (1000) incluent des moyens pour réaliser la commande de façon à stopper l'alimentation en carburant jusqu'à ce qu'une seconde période se soit écoulée après l'écoulement de la première période après l'actionnement de l'accélérateur, qui est réglée à l'avance, pendant la première période prédéterminée après la détection, qui est réglée à l'avance.
